# EUROPEAN PATENT SPECIFICATION

(11) **EP 1 313 338 B1**
(45) Date of publication and mention of the grant of the patent: **12.03.2008**
(21) Application number: 02257762.1
(22) Date of filing: 08.11.2002
(51) Int. Cl.: H04Q 7/36

(54) **Frequency channel allocation in a hierarchical microcells and macrocells WCDMA network**
Frequenzkanalzuteilung in einem hierarchischen Mikro- und Makrozellen WCDMA Netzwerk
Allocation de canaux de fréquences dans un réseau hiérarchique de micro-cellules et macro-cellules WCDMA

(30) Priority: 16.11.2001 GB 0127541
(43) Date of publication of application: 21.05.2003
(73) Proprietor: Hutchison Whampoa Three G IP (Bahamas) Limited, Nassau, New Providence (BS)
(72) Inventor: Hepsaydir, Erol, Maidenhead, Berkshire SL6 5JP (GB)
(74) Representative: Dawson, Elizabeth Ann

(56) References cited:
- EP-A- 0 973 353
- WU J-S: "NEW CHANNEL ASSIGNMENT METHODS FOR HOT-SPOT OVERLAYING CDMA CELLULAR SYSTEMS" EUROPEAN TRANSACTIONS ON TELECOMMUNICATIONS, EUREL PUBLICATION, MILANO, IT, vol. 11, no. 3, May 2000 (2000-05), pages 283-292, XP000963228 ISSN: 1124-318X
- CHIA S T S: "MIXED CELL ARCHITECTURE AND HANDOVER" IEE COLLOQUIUM ON MOBILE COMMUNICATIONS IN THE YEAR 2000, IEE, LONDON, GB, 9 June 1992 (1992-06-09), pages 10-1-10-5, XP000199832
- ALMGREN M ET AL: "Channel allocation and power settings in a cellular system with macro and micro cells using the same frequency spectrum" VEHICULAR TECHNOLOGY CONFERENCE, 1996. MOBILE TECHNOLOGY FOR THE HUMAN RACE., IEEE 46TH ATLANTA, GA, USA 28 APRIL-1 MAY 1996, NEW YORK, NY, USA,IEEE, US, 28 April 1996 (1996-04-28), pages 1150-1154, XP010162570 ISBN: 0-7803-3157-5

## Description

### Background

The present invention relates to a mobile communications network. In such networks, a geographical area to be covered by the network is divided into cells each having a node. In existing networks the nodes are represented by base stations. Communications to and from a mobile terminal in a cell take place via a node over one or a number of frequency channels allocated to the cell. A base transmitter station (BTS) in a wideband code division multiple access network is referred to as a Node B.

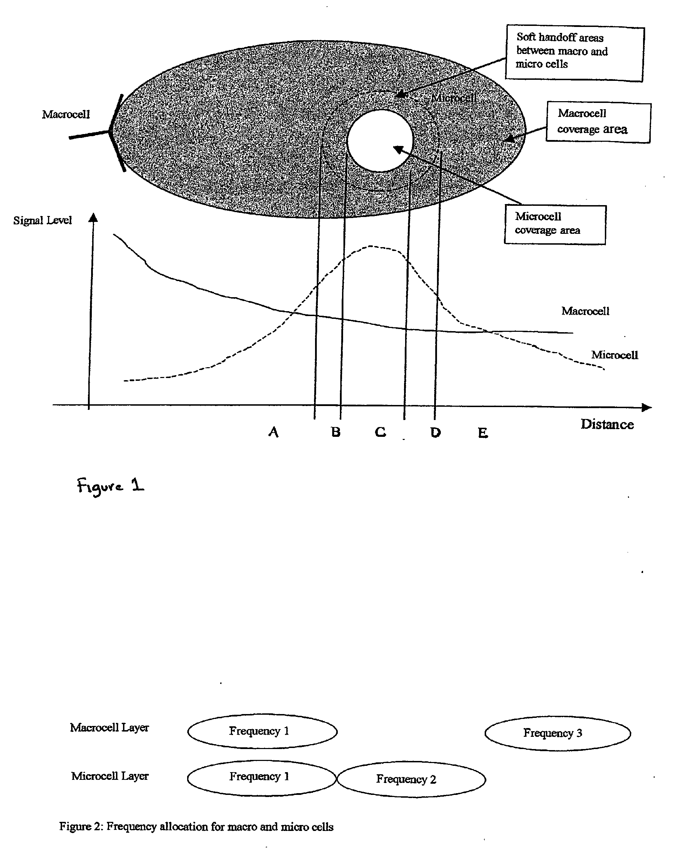

Cells may be of different types. For example macrocells are used in a network to provide large area coverage. Currently, microcells are deployed in many networks to increase the capacity. Within one macrocell coverage area there maybe one or more microcells deployed as shown in Figure 1.

In Wideband code division multiple access (WCDMA) networks, the macro and micro cell structure is used. A first group of frequency channels are allocated to the macrocells and a second group of different frequency channels are allocated to the microcells so that there is no overlap of channels between macro and micro cells. Each cell, i.e. microcell or macrocell, has its own Node B. Thus a caller within the geographical area of a microcell might be allocated to the microcell Node B or the macrocell Node B.

If adjacent cells have a common frequency channel, a terminal crossing the cell boundary will undergo what is called a "soft" handover from one channel to the other, i.e. the terminal continues to use the same frequency band. A handover which requires a change in frequency is called a "hard" handover.

Documents "New Channel Assignment Methods for Hot-Spot overlaying CDMA cellular Systems" by Wa J-S (published Mai 2005), EP-0-973 353 A (Nippon Telegraph & Telephone), " Mixed Cell Architecture and Handover" by Chia STS (published 9 June 1992) and "Channel allocation and power settings in a cellular system with macro and micro cells using the same frequency spectrum" by Almgren et al (published 28 April 1996) disclose macrocells/microcells overlay structures for CDMA cellular systems with frequency spectrum sharing.

According to the present invention as defined by claim 1, network coverage is improved by sharing frequency channels between macro and microcells, thereby enabling soft handovers to take place between macro and microcells.

Furthermore, it is advantageous to provide a minimum of two frequencies, one at the macrocell level and one at the microcell level, which are unshared.

The principals behind channel allocation are to ensure that:
1. enough capacity is reserved in hot spots where a significant number of users are located by sharing a frequency i.e. using frequency bands more efficiently;
2. there is always a less loaded frequency for the users to escape to when the UL (uplink) and DL (downlink) network quality of service deteriorates below the QoS (quality of service) requirements of the service; and
3. the use of Node B resources (e.g. Channel Elements) due to soft-handoff is optimised by handing off the user to another frequency.

Thus, another aspect of the invention provides a method of allocating frequencies in a system with micro and macrocells in which a shared frequency is used in preference to an unshared frequency. Typically a call will be allocated an unshared frequency only if the shared frequency or all available shared frequencies have insufficient capacity (e.g. they are already supporting too many customers) and/or cannot provide adequate quality of service.

Preferably a call using an unshared frequency will be moved to a shared frequency as soon as a shared frequency becomes available.

It will be appreciated that a "call" could be any kind of communication, not necessarily a voice call.

In the following some algorithms will also be discussed to increase the capacity in the network and to reduce the soft handoff area.

An embodiment of the invention will now be described by way of example only and with reference to the accompanying drawings in which:
Figure 1 illustrates the deployment of a microcell within a macrocell, and includes a graph of their respective signal levels;
Figure 2 illustrates the allocation of frequency channels between macro and microcells in an embodiment of the invention; and
Figure 3 is a flow chart illustrating a possible frequency allocation algorithm.

Let us assume that 3 frequency division duplex (FDD) frequencies are to be used to operate a WCDMA network.

The network will be divided into macrocells, and microcells. The coverage area of one macrocell is shown shaded in grey and the white circle within it represents the coverage area of a microcell. The dotted line represents the soft handoff area between macro and microcell. The microcells will be deployed in hot spots. The frequency allocation of microcells and the macrocells will be as shown in Figure 2.

As seen in Figure 2, there are a minimum of two frequencies 2 and 3 not shared in macro and micro layers. It is anticipated that firstly the shared frequency 1 will be utilised by the users. Then when the 'frequency 1' is loaded, the frequency 2 in the micro layer will be utilised. The 'frequency 3' will be kept to the end to make sure that the users can escape when they have quality issues in the 'frequency 1' and 'frequency 2'.

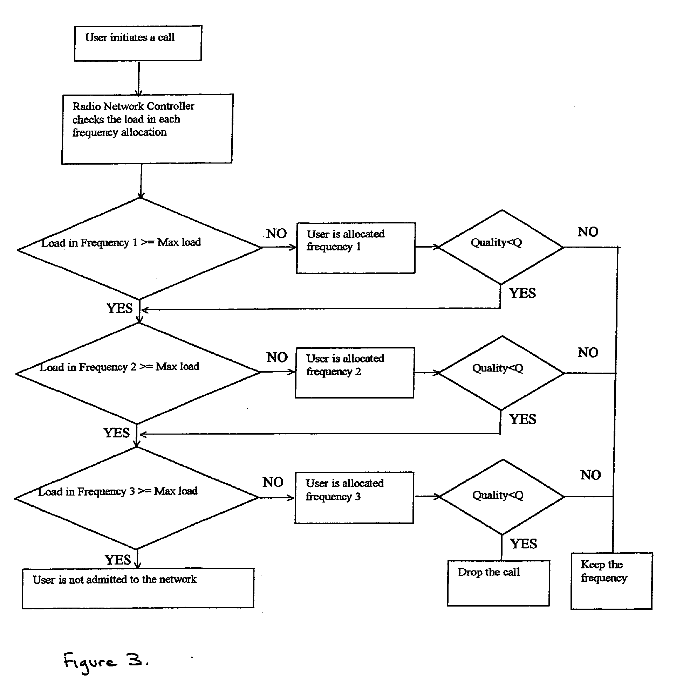

The idea of the present invention is to assign a **shared** frequency and in the preferred embodiment a minimum of two frequencies, one in the micro layer and one in the macro layer **unshared**. Figure 3 explains the algorithm followed when a user wants to access the network. Users will be allocated one of the frequencies 1, 2, 3 according to the steps of the flowchart of Figure 3.

Figure 3 is a call setup algorithm that will be used when a caller within the geographical coverage of a microcell wants to access the network. The radio network controller knows the load in each frequency which is directly proportional to the number of users on each frequency. As can be seen from the flow chart, the shared frequency 1 is used in preference to the unshared frequencies 2 and 3. If frequency 1 is not available, the caller will be allocated to frequency 2 via the microcell Node B, and if that frequency is not available the caller will be allocated to frequency 3 via the macrocell Node B.

### Minimising the soft handoff area

Soft handoff is an essential feature that WCDMA network has to have. Soft handoff can be explained as follows. When the handset moves from one cell coverage area to the neighbouring cell's coverage area, the handset starts using both sites for the same call, until the new cell's signal level is much stronger that the old one. Then the user drops the old cell. Since the handset uses both cells simultaneously it means that it is utilising channel elements in both cells for the same call. This would reduce the available hardware capacity in the network. It is always desirable to minimise the soft handoff area to increase the available hardware capacity in the network.

As explained above, the 'frequency 1' is used in both macro and micro cell layers. It is possible that there will be a large number of users in soft handoff (SHO) between the macro and micro cells. The following algorithm is proposed to optimise the use of soft handoff between the macro and micro cells (Refer to figure 1).
1. Handset is in area A
2. Handset moves to area B.
3. The Ec/Io (Chip Energy to Total Interference in the cell) level of the microcell increases so that the handset reports the Ec/Io level of the new cell to the RNC (Radio Network Controller).
4. The Radio Network Controller checks the number of users in soft handoff between the macro and micro cells in 'frequency 1'. If there are more than 'K' users i.e. the number of utilised Channel Elements in soft handoff or the required BTS power allocated to the SHO users is higher than the threshold, the user is forced to change the frequency to 'frequency 2'.
5. The user moves to area C
6. The Radio Network Controller checks the load in the 'frequency 1' and if there is enough capacity in the 'frequency 1', the Radio network controller changes the frequency of the user back to 'frequency 1'.
7. In area D, the Radio network controller repeats 4
8. When the user moves to region E, the handset uses the 'frequency 1' in the macro cell.

The foregoing procedure ensures that no more than a maximum number of users is in soft handoff by allocating users to other channels if the shared frequency is overloaded.

## Claims

1. A code division multiple access CDMA mobile communications network in which a geographical area covered by the network is divided into macrocells and each macrocell has a node, whereby communications to and from a mobile terminal in a macrocell may take place via its node over one or more of a plurality of frequency channels (Frequency 1, Frequency 3) allocated to the macrocell, wherein at least one macrocell has a microcell defined within it having its own node, whereby communications to and from a mobile terminal in a microcell may take place via its node over one or more of a plurality of frequency channels (Frequency 1, Frequency 2) allocated to the microcell, the microcell sharing at least one frequency channel (Frequency 1) with its macrocell and at least one of the macrocell and the microcell having at least one unshared frequency channel (Frequency 2, Frequency 3), the network being **characterized by**:
means arranged to allocate a shared frequency channel (Frequency 1) to a call if the shared frequency channel has sufficient capacity and arranged to allocate an unshared frequency channel (Frequency 2, Frequency 3) to a call only if the or each shared frequency channel have insufficient capacity.

2. A method of allocating frequencies in a CDMA mobile communications network in which a geographical area covered by the network is divided into macrocells and each macrocell has a node, whereby communications to and from a mobile terminal in a macrocell may take place via its node over one or more of a plurality of frequency channels (Frequency 1, Frequency 3) allocated to the macrocell, wherein at least one macrocell has a microcell defined within it having its own node, whereby communications to and from a mobile terminal in a microcell may take place via its node over one or more of a plurality of frequency channels (Frequency 1, Frequency 2) allocated to the microcell, the microcell sharing at least one frequency channel (Frequency 1) with its macrocell and at least one of the macrocell and the microcell having at least one unshared frequency channel (Frequency 2, Frequency 3), the method being **characterized by** :
allocating a shared frequency channel (Frequency 1) to a call if the shared frequency channel has sufficient capacity; and
allocating an unshared frequency channel (Frequency 2, Frequency 3) to a call only if the or each shared frequency channel have insufficient capacity.

3. A method as claimed in claim 2 in which the or each shared frequency channel (Frequency 1) have insufficient capacity if they cannot provide adequate quality of service.

4. A method as claimed in claims 2 or 3 wherein a call using an unshared frequency channel (Frequency 2, Frequency 3) is moved to a shared frequency channel (Frequency 1) as soon as there is sufficient shared frequency channel capacity.

## Patentansprüche

1. Mobiles Kommunikationsnetz mit Code-multiplex-zugriff CDMA, bei dem ein vom Netz erfasstes geografisches Gebiet in Makrozellen unterteilt ist und jede Makrozelle einen Knoten aufweist, wobei Kommunikationen zu bzw. von einem mobilen Endgerät in einer Makrozelle über deren Knoten über einen oder mehrere aus einer Mehrzahl von Frequenzkanälen (Frequenz 1, Frequenz 3) stattfinden kann, die der Makrozelle zugeordnet sind, worin mindestens eine Makrozelle eine Mikrozelle mit eigenem Knoten in ihr festgelegt hat, wobei Kommunikationen zu bzw. von einem mobilen Endgerät in einer Mikrozelle über deren Knoten über einen oder mehrere aus einer Mehrzahl von Frequenzkanälen (Frequenz 1, Frequenz 2) stattfinden kann, die der Mikrozelle zugeordnet sind, wobei die Mikrozelle mindestens einen Frequenzkanal (Frequenz 1) gemeinsam mit ihrer Makrozelle benutzt und die Makrozelle und/oder die Mikrozelle mindestens einen Frequenzkanal (Frequenz 2, Frequenz 3) nicht gemeinsam benutzen, welches Netz **gekennzeichnet ist durch**
Mittel, die angeordnet sind, um einen gemeinsam benutzten Frequenzkanal (Frequenz 1) einem Anruf zuzuordnen, wenn der gemeinsam benutzte Frequenzkanal ausreichend Kapazität aufweist, und die angeordnet sind, um einen nicht gemeinsam benutzten Frequenzkanal (Frequenz 2, Frequenz 3) einem Anruf nur dann zuzuordnen, wenn der oder jeder gemeinsam benutzte Frequenzkanal unzureichende Kapazität aufweist.

2. Verfahren zum Zuordnen von Frequenzen in einem mobilen CDMA-Kommunikationsnetz, bei dem ein vom Netz erfasstes geografisches Gebiet in Makrozellen unterteilt ist und jede Makrozelle einen Knoten aufweist, wobei Kommunikationen zu bzw. von einem mobilen Endgerät in einer Makrozelle über deren Knoten über einen oder mehrere aus einer Mehrzahl von Frequenzkanälen (Frequenz 1, Frequenz 3) stattfinden kann, die der Makrozelle zugeordnet sind, worin mindestens eine Makrozelle eine Mikrozelle mit eigenem Knoten in ihr festgelegt hat, wobei Kommunikationen zu bzw. von einem mobilen Endgerät in einer Mikrozelle über deren Knoten über einen oder mehrere aus einer Mehrzahl von Frequenzkanälen (Frequenz 1, Frequenz 2) stattfinden kann, die der Mikrozelle zugeordnet sind, wobei die Mikrozelle mindestens einen Frequenzkanal (Frequenz 1) gemeinsam mit ihrer Makrozelle benutzt und die Makrozelle und/oder die Mikrozelle mindestens einen Frequenzkanal (Frequenz 2, Frequenz 3) nicht gemeinsam benutzen, welches Verfahren **gekennzeichnet ist durch**
Zuordnen eines gemeinsam benutzten Frequenzkanals (Frequenz 1) zu einem Anruf, wenn der gemeinsam benutzte Frequenzkanal ausreichend Kapazität aufweist; und Zuordnen eines nicht gemeinsam benutzten Frequenzkanals (Frequenz 2, Frequenz 3) zu einem Anruf nur dann, wenn der oder jeder gemeinsam benutzte Frequenzkanal unzureichende Kapazität aufweist.

3. Verfahren nach Anspruch 2, bei dem der oder jeder gemeinsam benutzte Frequenzkanal (Frequenz 1) unzureichende Kapazität aufweist, wenn er keine angemessene Servicequalität gewährleisten kann.

4. Verfahren nach Anspruch 2 oder 3, worin ein einen nicht gemeinsam benutzten Frequenzkanal (Frequenz 2, Frequenz 3) benutzender Anruf zu einem gemeinsam benutzten Frequenzkanal (Frequenz 1) verschoben wird, sobald am gemeinsam benutzten Frequenzkanal ausreichende Kapazität vorhanden ist.

## Revendications

1. Réseau de communications mobiles à accès multiple par répartition de code (CDMA) dans lequel une zone géographique couverte par le réseau est divisée en macrocellules et chaque macrocellule a un noeud, grâce à quoi les communications à destination et en provenance d'un terminal mobile dans une macrocellule peuvent avoir lieu par l'intermédiaire de son noeud sur un ou plusieurs d'une pluralité de canaux de fréquences (Fréquence 1, Fréquence 3) affectés à la macrocellule, dans lequel une microcellule est définie à l'intérieur d'au moins une macrocellule et possède son propre noeud, de telle sorte que les communications à destination et en provenance d'un terminal mobile dans une microcellule peuvent avoir lieu par l'intermédiaire de son noeud sur un ou plusieurs d'une pluralité de canaux de fréquences (Fréquence 1, Fréquence 2) affectés à la microcellule, la microcellule partageant au moins un canal de fréquence (Fréquence 1) avec sa macrocellule et au moins l'une de la macrocellule et de la microcellule ayant au moins un canal de fréquence non partagé (Fréquence 2, Fréquence 3), le réseau étant
**caractérisé par**
un moyen agencé pour affecter un canal de fréquence partagé (Fréquence 1) à un appel si le canal de fréquence partagé a une capacité suffisante, et agencé pour affecter un canal de fréquence non partagé (Fréquence 2, Fréquence 3) à un appel seulement si le ou chaque canal de fréquence partagé a une capacité insuffisante.

2. Procédé d'affectation des fréquences dans un réseau de communications mobiles CDMA dans lequel une zone géographique couverte par le réseau est divisée en macrocellules et chaque macrocellule a un noeud, grâce à quoi les communications à destination et en provenance d'un terminal mobile dans une macrocellule peuvent avoir lieu par l'intermédiaire de son noeud sur l'un ou plusieurs d'une pluralité de canaux de fréquences (Fréquence 1, Fréquence 3) affectés à la macrocellule, dans lequel une microcellule est définie dans au moins une macrocellule et possède son propre noeud, grâce à quoi les communications à destination et en provenance d'un terminal mobile dans une microcellule peuvent avoir lieu par l'intermédiaire de son noeud sur un ou plusieurs d'une pluralité de canaux de fréquences (Fréquence 1, Fréquence 2) affectés à la microcellule, ladite microcellule partageant au moins un canal de fréquence (Fréquence 1) avec sa macrocellule et au moins l'une de la macrocellule et de la microcellule ayant au moins un canal de fréquence non partagé (Fréquence 2, Fréquence 3), le procédé étant **caractérisé par**
l'affectation d'un canal de fréquence partagé (Fréquence 1) à un appel si le canal de fréquence partagé a une capacité suffisante ; et
l'affectation d'un canal de fréquence non partagé (Fréquence 2, Fréquence 3) à un appel seulement si le ou chaque canal de fréquence partagé a une capacité insuffisante.

3. Procédé selon la revendication 2, dans lequel le ou chaque canal de fréquence partagé (Fréquence 1) a une capacité insuffisante s'il ne peut pas fournir une qualité de service adéquate.

4. Procédé selon les revendications 2 ou 3, dans lequel un appel utilisant un canal de fréquence non partagé (Fréquence 2, Fréquence 3) est déplacé à un canal de fréquence partagé (Fréquence 1) dès qu'il y a une capacité de canal de fréquence partagé suffisante.
